(19) Europäisches Patentamt / European Patent Office / Office européen des brevets

(11) **EP 4 545 721 A1**

(12) **EUROPEAN PATENT APPLICATION**
published in accordance with Art. 153(4) EPC

(43) Date of publication:
**30.04.2025 Bulletin 2025/18**

(21) Application number: **22948038.9**

(22) Date of filing: **24.06.2022**

(51) International Patent Classification (IPC):
**E04B 1/86** (2006.01)       **G10K 11/168** (2006.01)
**B29C 43/30** (2006.01)

(52) Cooperative Patent Classification (CPC):
**B29C 43/30; E04B 1/86; G10K 11/168**

(86) International application number:
**PCT/JP2022/025384**

(87) International publication number:
**WO 2023/248479 (28.12.2023 Gazette 2023/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Resonac Corporation
Tokyo 105-7325 (JP)**

(72) Inventors:
• **TAKAYASU, Satoshi**
  **Tokyo 105-7325 (JP)**
• **SHIMIZU, Mari**
  **Tokyo 105-7325 (JP)**
• **KOTAKE, Tomohiko**
  **Tokyo 105-7325 (JP)**

(74) Representative: **Berggren Oy**
  **P.O. Box 16**
  **Eteläinen Rautatiekatu 10A**
  **00101 Helsinki (FI)**

(54) **METHOD FOR MANUFACTURING SOUND-ABSORBING MEMBER**

(57)     A method for manufacturing a sound-absorbing member formed by laminating a plurality of sheet-like materials includes a compression step of compressing a plurality of sheet-like materials layered via an adhesive in a thickness direction thereof to obtain a compressed body, in which at least one of the plurality of sheet-like materials is a porous body, and a thickness of at least one of the sheet-like materials being a porous body in the compressed body is 70 to 99% of a thickness before compression.

*Fig.7*

## Description

## Technical Field

The present disclosure relates to a method for manufacturing a sound-absorbing member, and more particularly relates to a method for manufacturing a sound-absorbing member formed by laminating a plurality of sheet-like materials.

## Background Art

In vehicles, buildings, electrical appliances, and the like, in order to reduce noise from a noise source, a porous body such as a nonwoven fabric or a resin foam is used as a sound-absorbing member (see, for example, Patent Literatures 1 and 2).

## Citation List

## Patent Literature

Patent Literature 1: Japanese Unexamined Patent Publication No. 2012-214957

Patent Literature 2: Japanese Unexamined Patent Publication No. 2019-183008

## Summary of Invention

## Technical Problem

From the viewpoint of coping with various noise sources, the sound-absorbing member is required to have sound-absorbing performance corresponding to the frequencies of the noise sources. However, in the case of a single sound-absorbing member in the form of a porous body, in order to enhance the sound-absorbing performance at a low frequency (for example, 1,500 Hz or less), an increase in thickness and weight is significant. In consideration of practical requirements such as space saving and weight reduction, it is desirable to improve sound-absorbing performance at a low frequency while reducing the thickness of the sound-absorbing member.

The present inventors have focused on the fact that a laminated structure of porous bodies or a laminated structure of a porous body and a thin film body is effective in improving the sound-absorbing performance in a low frequency region and reducing the thickness, and studied to prepare a sound-absorbing member by laminating a plurality of sheet-like materials, and found that there are the following problems. In order to firmly join the sheet-like materials, compression is required, but if the thickness of the laminated body is excessively reduced by compression, sound-absorbing performance becomes insufficient. On the other hand, when compression is performed lightly in order to prevent the reduction in thickness, joining between the sheet-like materials becomes insufficient, and practical durability may not be obtained, or the effect of improving the sound-absorbing performance in a low frequency region by the laminated structure may not be obtained.

An object of the present disclosure is to provide a method for manufacturing a sound-absorbing member capable of achieving both excellent sound-absorbing performance in a low frequency range and durability.

## Solution to Problem

The present disclosure relates to the following inventions [1] to [13].

[1] A method for manufacturing a sound-absorbing member formed by laminating a plurality of sheet-like materials, the method including a compression step of compressing a plurality of sheet-like materials layered via an adhesive in a thickness direction thereof to obtain a compressed body, in which at least one of the plurality of sheet-like materials is a porous body, and a thickness of at least one of the sheet-like materials being a porous body in the compressed body is 70 to 99% of a thickness before compression.

[2] The method for manufacturing a sound-absorbing member according to [1], wherein in the compression step, a compressibility in the thickness direction of the plurality of layered sheet-like materials is 10% to 90%.

[3] The method for manufacturing a sound-absorbing member according to [1] or [2], wherein in the compression step, the plurality of layered sheet-like materials are compressed at a temperature of 10 to 200°C.

[4] The method for manufacturing a sound-absorbing member according to any one of [1] to [3], wherein the adhesive is provided by spray application or transfer with a roll coater.

[5] The method for manufacturing a sound-absorbing member according to any one of [1] to [4], wherein the method is a roll-to-roll method.

[6] The method for manufacturing a sound-absorbing member according to any one of [1] to [4], wherein the method is a roll-to-sheet method.

[7] The method for manufacturing a sound-absorbing member according to any one of [1] to [6], wherein the sheet-like material being a porous body is a nonwoven fabric or a resin foam.

[8] The method for manufacturing a sound-absorbing member according to any one of [1] to [7], wherein at least one of the plurality of sheet-like materials is a resin film containing at least one type selected from a group consisting of a polyolefin resin, a polyester resin, and a polyurethane resin.

[9] The method for manufacturing a sound-absorbing member according to [8], wherein a structure in which a sheet-like material being a porous body and a resin sheet are layered via an adhesive is included in the plurality of layered sheet-like materials.

[10] The method for manufacturing a sound-absorbing member according to any one of [1] to [9], wherein two or more of the plurality of sheet-like materials are porous bodies, and a structure in which a sheet-like material being a porous body and a sheet-like material being a porous body are layered via an adhesive is included in the plurality of layered sheet-like materials.

[11] The method for manufacturing a sound-absorbing member according to any one of [1] to [10], wherein two or more of the plurality of sheet-like materials are porous bodies, at least one of the plurality of sheet-like materials is a resin film containing at least one type selected from a group consisting of a polyolefin resin, a polyester resin, and a polyurethane resin, and a structure in which a resin film, a sheet-like material being a porous body, and a sheet-like material being a porous body are layered in this order via an adhesive is included in the plurality of layered sheet-like materials.

[12] The method for manufacturing a sound-absorbing member according to any one of [1] to [11], wherein the adhesive contains at least one adhesive component selected from a group consisting of a polyolefin-based resin, a polyester-based resin, a polyurethane-based resin, an acrylic-based resin, and a silicone-based resin.

[13] The method for manufacturing a sound-absorbing member according to any one of [1] to [12], wherein the adhesive is a hot-melt adhesive.

**Advantageous Effects of Invention**

According to the present disclosure, it is possible to provide a method for manufacturing a sound-absorbing member capable of achieving both excellent sound-absorbing performance in a low frequency range and durability.

For example, according to the method for manufacturing a sound-absorbing member described in [1], it is possible to obtain a compressed body in which a porous structure capable of damping sound energy is incorporated with a thickness and an adhesive strength that can ensure sufficient sound-absorbing performance in the compression step. The sound-absorbing member including such a compressed body can have excellent sound-absorbing performance in a low frequency region while having sufficient practical durability.

**Brief Description of Drawings**

FIG. 1 is a schematic view for explaining a compression step in a method for manufacturing a sound-absorbing member.

FIG. 2 is a schematic view for explaining the compression step in the method for manufacturing a sound-absorbing member.

FIG. 3 is a schematic view showing a configuration example of a sound-absorbing member.

FIG. 4 is a schematic view showing a configuration example of a sound-absorbing member.

FIG. 5 is a schematic view showing a configuration example of a sound-absorbing member.

FIG. 6 is a schematic view showing a configuration example of a sound-absorbing member.

FIG. 7 is a schematic view for explaining an example of the method for manufacturing a sound-absorbing member.

**Description of Embodiments**

Hereinafter, embodiments for carrying out the present disclosure will be described in detail with reference to the drawings as the case may be. However, the present disclosure is not limited to the following embodiments.

<Method for Manufacturing Sound-Absorbing Member>

A method for manufacturing a sound-absorbing member of the present embodiment is a method for manufacturing a sound-absorbing member formed by laminating a plurality of sheet-like materials, and includes a compression step of compressing a plurality of sheet-like materials layered via an adhesive in a thickness direction thereof to obtain a compressed body, and at least one of the plurality of sheet-like materials is a porous body.

Examples of the sheet-like material in the form of a porous body include a resin foam, a nonwoven fabric, a polymer porous body, and a porous ceramic. Among these, from the viewpoint of excellent sound-absorbing properties in a low frequency region, the sheet-like material in the form of a porous body may be a resin foam or a nonwoven fabric.

Examples of fibers constituting the nonwoven fabric include organic fibers and inorganic fibers. Examples of the organic fibers include polyolefin fibers such as polyethylene (low density or high density), polypropylene, copolymerized polyethylene, and copolymerized polypropylene, polyester fibers such as polyethylene terephthalate, polytrimethylene terephthalate, polybutylene terephthalate, polyethylene naphthalate, and polybutylene naphthalate, and natural fibers such as acrylic fibers, polyamide fibers, nylon fibers, rayon fibers, and wool. Examples of the inorganic fibers include glass fibers, metal fibers, ceramic fibers, and carbon fibers. The fibers constituting the nonwoven fabric may contain one type or two or more types thereof.

The average fiber diameter of the fibers constituting the nonwoven fabric may be 1 to 40 μm, or 2 to 30 μm, or 3 to 25 μm from the viewpoint of sound-absorbing performance and shape retention.

The thickness of the sheet-like material in the form of a porous body can be set to 0.5 to 15 mm, and may be 1 to 12 mm, or 2 to 10 mm from the viewpoint of excellent sound-absorbing properties in a low frequency region. When the plurality of layered sheet-like materials include a plurality of sheet-like materials in the form of porous bodies, the plurality of sheet-like materials in the form of porous bodies may have the same thickness or different thicknesses.

The density of the sheet-like material in the form of a porous body can be set to 10 to 250 kg/m³, and may be 20 to 200 kg/m³, or 30 to 150 kg/m³ from the viewpoint of excellent sound-absorbing properties in a low frequency region. When the plurality of layered sheet-like materials include a plurality of sheet-like materials in the form of porous bodies, the plurality of sheet-like materials in the form of porous bodies may have the same density or different densities.

The airflow resistance of the sheet-like material in the form of a porous body can be set to 0.003 to 2.0 kPa·s/m, and may be 0.030 to 1.75 kPa·s/m, or 0.05 to 1.50 kPa·s/m from the viewpoint of excellent sound-absorbing properties in a low frequency region. When the plurality of layered sheet-like materials include a plurality of sheet-like materials in the form of porous bodies, the plurality of sheet-like materials in the form of porous bodies may have the same airflow resistance or different airflow resistances.

The compressive elastic modulus of the sheet-like material in the form of a porous body can be set to 0.001 to 5.0 MPa, and may be 0.002 to 2.0 MPa, or 0.003 to 1.0 MPa, or 0.010 to 0.50 MPa from the viewpoint of excellent sound-absorbing properties in a low frequency region. When the plurality of layered sheet-like materials include a plurality of sheet-like materials in the form of porous bodies, the plurality of sheet-like materials in the form of porous bodies may have the same compressive elastic modulus or different compressive elastic moduli.

In the present description, the compressive elastic modulus of the sheet-like material is determined by the following procedure.

First, a sheet-like material cut into 20 mm × 20 mm is prepared as a measurement sample. The thickness of the measurement sample is measured with a caliper.

As the measuring device, a small tabletop testing machine (EZ-Test, manufactured by Shimadzu Corporation) is used. As the load cell, a load cell of 500 N is used. In addition, an upper platen (φ30 mm) made of stainless steel and a lower platen (φ118 mm) made of stainless steel are used as the compression measurement jig.

The measurement is performed under the conditions of a speed of 5.0 mm/min, a measurement temperature of 25°C, and a compression mode with the thickness direction of the measurement sample set perpendicular to the upper platen and the lower platen between the upper platen and the lower platen arranged in parallel. The compressive elastic modulus is calculated from a stress-strain curve.

Here, a strain ε is obtained from the following formula.

$$\varepsilon = \Delta d/d1$$

In the formula, $\Delta d$ denotes a displacement (mm) of the thickness of the measurement sample by a load, and d1 denotes the thickness (mm) of the measurement sample before the load is applied.

In addition, the compressive stress σ (MPa) is obtained from the following formula.

$$\sigma = F/A$$

In the formula, F denotes a compressive force (N) and A denotes the cross-sectional area (mm²) of the measurement sample before a load is applied.

The compressive elastic modulus E (MPa) is calculated from the slope of the strain between 20% and 30% from the stress-strain curve using the following formula.

$$E = (\sigma2 - \sigma1)/(\varepsilon2 - \varepsilon1)$$

In the formula, ε2 denotes a compressive strain of 30%, ε1 denotes a compressive strain of 20%, σ1 denotes a compressive stress measured at the compressive strain ε1, and σ2 denotes a compressive stress measured at the compressive strain ε2.

Examples of the sheet-like material other than the sheet-like material in the form of a porous body include a resin film.

Examples of a resin constituting the resin film include polyolefin resins such as polyethylene (low density or high density), polypropylene, copolymerized polyethylene, and copolymerized polypropylene; polyester resins such as polyethylene terephthalate, polytrimethylene terephthalate, polybutylene terephthalate, polyethylene naphthalate, and polybutylene naphthalate; polyamide resins; polyether resins; polyurethane resins; polyacrylic resins; vinyl chloride resins; chlorinated polyethylene resins; silicone resins; polycarbonate resins; synthetic rubbers; natural rubbers; and modified resins thereof. The resin film can contain one type or two or more types thereof. From the viewpoint of thinning the film for weight reduction, heat resistance, durability, and the like, the resin film can contain at least one type selected from the group consisting of a polyolefin resin, a polyester resin, and a polyurethane resin.

The thickness of the resin film can be set to 0.5 to 500 mm, and may be 5 to 250 mm, or 10 to 150 mm from the viewpoint of excellent sound-absorbing properties in a low frequency region. When the plurality of layered sheet-like materials include a plurality of resin films, the plurality of resin films may have the same thickness or different thicknesses.

The resin film may include a metal vapor deposition layer on the surface thereof from the viewpoint of imparting a sound-absorbing effect improving function and a heat ray reflection function by adjusting the film properties. The metal vapor deposition layer can be formed by physical vapor deposition or chemical vapor deposition such as vacuum vapor deposition of a metal such as aluminum, copper, zinc, a zinc alloy, or silver. The metal vapor deposition layer may be provided on both surfaces of the resin film, or may be provided on one surface.

The resin film may be a perforated film from the viewpoint of improving a sound-absorbing effect in a low frequency region and adjusting a sound absorption frequency peak. The perforated film may have holes arranged in a lattice shape or a rhombus shape. The hole may have a circular shape with a diameter of 0.1 to 50.0 mm, a circular shape with a diameter of 0.2 to 10.0 mm, or a circular shape with a diameter of 0.3 to 5.0 mm from the viewpoint of excellent sound-absorbing properties in a low frequency region. The shape of the hole may be a circle, an ellipse, a rectangle, a polygon, or the like.

The plurality of layered sheet-like materials may include a sheet-like material (hereinafter, also referred to as an "intermediate layer-forming sheet-like material") having a thickness of 0.01 mm or more and less than 0.5 mm. Such a sheet-like material can form an intermediate layer capable of improving the sound-absorbing performance in a low frequency region and improving durability and strength in the sound-absorbing member to be obtained. When the plurality of layered sheet-like materials include the intermediate layer-forming sheet-like material, the thickness of the sheet-like material in the form of a porous body may be 0.5 mm or more.

The intermediate layer-forming sheet-like material may be made of a material similar to that of the sheet-like material in the form of a porous body described above, and may be a nonwoven fabric from the viewpoint of improving the sound-absorbing performance in a low frequency region. The intermediate layer-forming sheet-like material may be made of a material similar to that of the resin film described above from the viewpoint of improving durability.

The thickness of the intermediate layer-forming sheet-like material can be set to 0.01 mm or more and less than 0.5 mm, and may be 0.02 to 0.3 mm, or 0.05 to 0.2 mm from the viewpoint of processability for lamination or the like. When the plurality of layered sheet-like materials include a plurality of intermediate layer-forming sheet-like materials, the plurality of intermediate layer-forming sheet-like materials may have the same thickness or different thicknesses.

When the intermediate layer-forming sheet-like material is a porous body, the airflow resistance thereof can be set to 0.01 kPa·s/m or more, and may be 0.01 to 10 kPa·s/m, or 0.1 to 7 kPa·s/m, or 0.25 to 5 kPa·s/m, or 0.5 to 2 kPa·s/m from the viewpoint of improving the sound-absorbing performance in a low frequency region. When the plurality of layered sheet-like materials include a plurality of porous intermediate layer-forming sheet-like materials, the plurality of intermediate layer-forming sheet-like materials may have the same airflow resistance or different airflow resistances.

Examples of the adhesive component of the adhesive include a vinyl acetate resin, a polyolefin resin, an ethylene-vinyl acetate copolymer resin, an isobutene-maleic anhydride copolymer resin, an acrylic copolymer resin, an acrylic monomer, an acrylic oligomer, a styrene-butadiene rubber, a vinyl chloride resin, a chloroprene rubber, a nitrile rubber, a urethane resin, a silylated urethane resin, an epoxy resin, a modified epoxy resin, a polyethylene resin, an ionomer resin, a silicone resin, a modified silicone resin, water glass, and silicate. From the viewpoint of handleability and durability of the adhesive, the adhesive may contain at least one adhesive component selected from the group consisting of a polyolefin-based resin, a polyester-based resin, a polyurethane-based resin, an acrylic-based resin, and a silicone-based resin. As the adhesive, a laminated material (for example, a double-sided tape) including a layer containing the adhesive component or a layer containing the adhesive component on both surfaces of a support made of a paper, a cloth, a resin film, a metal tape, or the like may be used. Each adhesive layer may be made of the same material or a different material.

When a plurality of adhesives are interposed in the plurality of layered sheet-like materials, the plurality of adhesives may be made of the same adhesive component or different adhesive components.

The adhesive may be a hot-melt adhesive from the viewpoint of controlling the application amount and durability. Examples of the hot-melt adhesive include ethylene-vinyl acetate copolymer-based, polyolefin-based, polyamide-based, synthetic rubber-based, acrylic-based, polyurethane-based, and polyester-based hot-melt adhesives.

The adhesive may have a viscosity of 0.1 to 30 Pa·s, or 1 to 20 Pa·s, or 2 to 15 Pa·s at 120°C.

The thickness of the adhesive can be set to 0.1 to 500 $\mu$m, and may be 1 to 200 $\mu$m. When a plurality of adhesives are interposed in the plurality of layered sheet-like materials, the plurality of adhesives may have the same thickness or different thicknesses.

The application weight of the adhesive can be set to 1 to 300 g/m$^2$, and may be 10 to 150 g/m$^2$. When a plurality of adhesives are interposed in the plurality of layered sheet-like materials, the plurality of adhesives may have the same application weight or different application weights.

The adhesive may be provided by spray application or transfer with a roll coater. For example, the adhesive may be spray-applied or transferred with a roll coater onto the main surface of the sheet-like material before being layered. The viscosity of the adhesive at the time of application or transfer can be set to 0.1 to 30 Pa·s, and may be 1 to 20 Pa·s, or 2 to 15 Pa·s. The viscosity of the adhesive may be adjusted with a solvent. The solvent may be water, an organic solvent, or a mixed solvent containing water and an organic solvent. The organic solvent is not particularly limited as long as it can adjust the viscosity of the adhesive, and examples thereof include aromatic hydrocarbons such as toluene, xylene, mesitylene, cumene, and p-cymene; aliphatic hydrocarbons such as hexane, heptane, and pentane; ethers such as diethyl ether, tetrahydrofuran, and 1,4-dioxane; alcohols such as methanol, ethanol, isopropanol, butanol, ethylene glycol, and propylene glycol; ketones such as acetone, methyl ethyl ketone, methyl isobutyl ketone, cyclohexanone, and 4-hydroxy-4-methyl-2-pentanone; esters such as methyl acetate, ethyl acetate, and butyl acetate; amides such as N,N-dimethylformamide, N,N-dimethylacetamide, and N-methylpyrrolidone.

The adhesive may be provided in the entire area of the main surface of the sheet-like material, or may be provided in a range of 1 to 99%, a range of 5 to 70%, or a range of 10 to 50% of the area of the main surface of the sheet-like material from the viewpoint of achieving durability, sound-absorbing properties, and weight reduction of the sound-absorbing member. The adhesive may be provided in a mist form, a web form, a spiral form, a dot form, a line form, or the like, or may be provided in a predetermined pattern.

The total thickness of the plurality of sheet-like materials layered via the adhesive can be set to 3 to 35 mm, and may be 25 mm or less, or 15 mm or less from the viewpoint of durability, and may be 4 mm or more or 5 mm or more from the viewpoint of sound-absorbing performance.

The plurality of sheet-like materials layered via the adhesive can be formed, for example, by supplying a sheet-like material from a plurality of unwinding devices to a roll press device. In this case, a step of applying or transferring the adhesive to some or all of the sheet-like materials so that the adhesive is interposed between the sheet-like materials to be layered may be provided. The adhesive may be provided on one surface or both surfaces of the sheet-like material.

In the method for manufacturing a sound-absorbing member of the present embodiment, the plurality of layered sheet-like materials can be compressed such that the thickness (hereinafter, also referred to as "thickness after compression") of at least one of the sheet-like materials being porous bodies in the compressed body is 70 to 99% of the thickness before compression. The thickness after compression of the sheet-like material being a porous body can be adjusted to fall within the above range by appropriately setting the pressure and temperature at the time of compression, the compressibility of the plurality of layered sheet-like materials described later, and the like according to the physical properties of the sheet-like material.

The thickness after compression may be checked immediately after compression, or 10 to 600 seconds after compression, or 60 seconds after compression.

Examples of a unit that compresses the plurality of sheet-like materials layered via the adhesive include a press device including a laminate roll, a press device including a press conveyor, and a press device in which a line and a press are continuous.

From the viewpoint of achieving both sound-absorbing performance and durability, the thickness after compression may be 80 to 99%, or 85 to 95% of the thickness before compression, and the compression step may be performed so that the thicknesses after compression of all sheet-like materials being porous bodies satisfy the above-described conditions.

In the compression step, the compressibility in the thickness direction of the plurality of layered sheet-like materials can be set to 10% to 90%, and may be 20 to 80%, or 30 to 70% from the viewpoint of reducing wrinkles during lamination, reducing warpage of the compressed body, and improving durability by ensuring adhesive strength. The compressibility can be adjusted by appropriately setting the lamination gap (for example, an interval between a pair of rolls, an interval between a roll and a conveying belt, or the like) of the roll press device or the lamination pressure of the laminate roll.

In the compression step, the plurality of layered sheet-like materials may be compressed at a temperature of 10 to 200°C or may be compressed at a temperature of 15 to 150°C. In this case, the sheet-like materials may be compressed after being heated in a heating furnace or the like, or may be heated simultaneously with the compression by a heat roll, a conveyor, a hot plate press, or the like.

In the compression step, the plurality of layered sheet-like materials may include a structure in which a sheet-like material being a porous body and a resin sheet are layered via an adhesive. In this case, it is possible to incorporate a structure in which a resin layer derived from a resin sheet capable of exhibiting a film vibration sound-absorbing effect in which a sound absorption peak frequency is formed in a low frequency region and a porous layer derived from a sheet-like material being a porous body capable of exhibiting a sound energy damping effect are joined with a sufficient adhesive strength into the compressed body to be obtained, and it is easy to further improve the sound-absorbing performance in a low frequency region of the sound-absorbing member.

Further, the plurality of layered sheet-like materials may include a structure in which a sheet-like material being a porous body and a sheet-like material being a porous body are layered via an adhesive. In this case, in addition to further obtaining a sound energy damping effect, the damping effect at the interface of the sheet-like materials can also be obtained, so that it is easy to improve the sound-absorbing performance in a low frequency region while reducing the thickness.

Further, the plurality of layered sheet-like materials may include a structure in which a resin film, a sheet-like material being a porous body and a sheet-like material being a porous body are layered in this order via an adhesive. In this case, as described above, it is possible to obtain an effect exhibited by a structure in which a resin film and a sheet-like material being a porous body are layered via an adhesive and an effect exhibited by a structure in which a sheet-like material being a porous body and a sheet-like material being a porous body are layered via an adhesive, and it is easy to further improve the sound-absorbing performance in a low frequency region of the sound-absorbing member.

In the method for manufacturing a sound-absorbing member of the present embodiment, the compressed body obtained through the compression step may be obtained as a sound-absorbing member as it is, or a member obtained by further laminating another sheet-like material (for example, the above-described sheet-like material or compressed body, or a base material such as a resin plate or a metal plate) on the compressed body may be used as a sound-absorbing member, or these may be molded into a predetermined shape. The compressed body can include a porous layer derived from a sheet-like material being a porous body, a resin layer derived from a resin film, and an adhesive layer derived from an adhesive.

In the compression step, the plurality of layered sheet-like materials may include a compressed body obtained in the same manner as the compression step as a sheet-like material. That is, the method of the present embodiment may include two or more compression steps, and a plurality of sheet-like materials layered via an adhesive in the subsequent compression step may include a compressed body obtained in the preceding compression step as a sheet-like material. In this case, for the thickness after compression in the subsequent compression step, a sheet-like material being an uncompressed porous body can be used as an index.

The method for manufacturing a sound-absorbing member of the present embodiment may be a roll-to-roll method or a roll-to-sheet method.

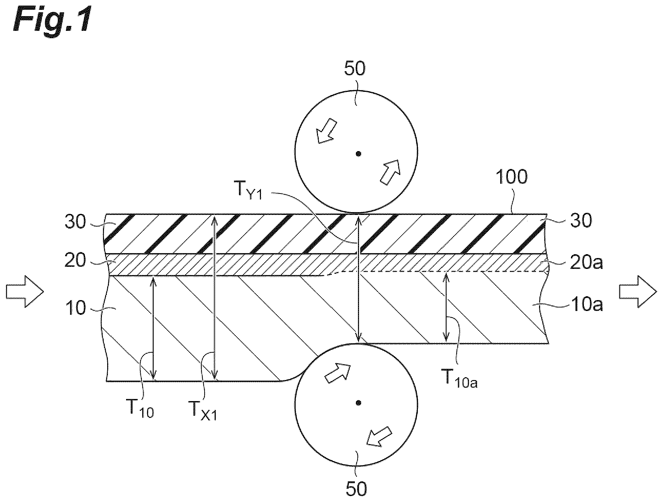

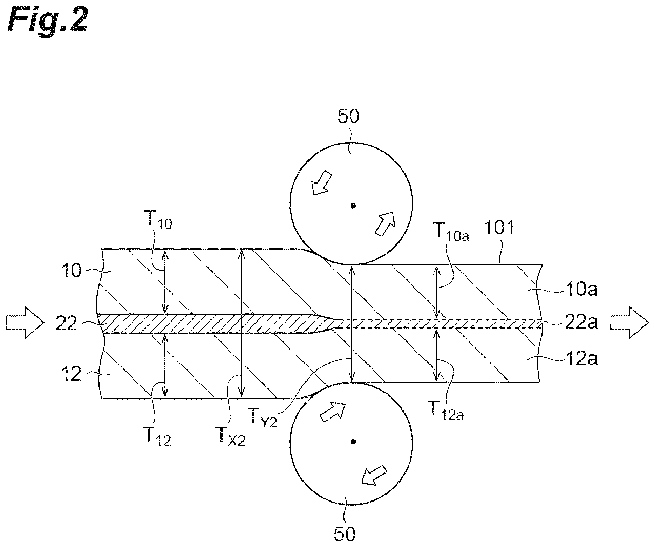

FIGS. 1 and 2 are schematic views for explaining the compression step in the method for manufacturing a sound-absorbing member.

In the compression step shown in FIG. 1, a sheet-like material 10 being a porous body and a resin film 30, which are layered via an adhesive 20 and conveyed, are compressed by a pair of laminate rolls 50 to obtain a compressed body 100. Through this step, the sheet-like material 10 being a porous body before compression with a thickness $T_{10}$ is compressed to a thickness 10a, and a sheet-like material 10a being a compressed porous body and the resin film 30 are joined with an adhesive 20a.

In the compression step shown in FIG. 1, the thickness $T_{10a}$ of the sheet-like material being a porous body in the compressed body 100 is 70 to 99% of the thickness $T_{10}$ before compression. The thickness $T_{10a}$ may be 80 to 99%, or 85 to 95% of the thickness $T_{10}$.

In the compression step shown in FIG. 1, the compressibility ($T_{y1} \times 100/T_{x1}$) in the thickness direction of the plurality of layered sheet-like materials can be set to 10% to 90%, and may be set to 20 to 80%, or 30 to 70% from the viewpoint of reducing wrinkles during lamination, reducing warpage of the compressed body, and improving durability by ensuring adhesive strength.

In the compression step shown in FIG. 2, a sheet-like material 10 being a porous body and a sheet-like material 12 being a porous body, which are layered via an adhesive 22 and conveyed, are compressed by a pair of laminate rolls 50 to obtain a compressed body 101. Through this step, the sheet-like materials 10 and 12 being porous bodies before compression with a thickness of $T_{10}$ and $T_{12}$, respectively, are compressed to a thickness $T_{10a}$ and $T_{12a}$, and a sheet-like material 10a being a compressed porous body and a sheet-like material 12a being a compressed porous body are joined with an adhesive 22a.

In the compression step shown in FIG. 2, the thickness of at least one of the sheet-like materials 10b and 12b being porous bodies in the compressed body is 70 to 99% of the thickness before compression. That is, $T_{10a} \times 100/T_{10}$, $T_{12a} \times 100/T_{12}$, or both may be 70 to 99%, or 80 to 99%, or 85 to 95%.

In the compression step shown in FIG. 2, the compressibility ($T_{y2} \times 100/T_{x2}$) in the thickness direction of the plurality of layered sheet-like materials can be set to 10% to 90%, and may be set to 20 to 80%, or 30 to 70% from the viewpoint of reducing warpage of the compressed body, and improving durability by ensuring adhesive strength.

In the compression step shown in FIGS. 1 and 2, a roll press device including a pair of laminate rolls 50 is used, but a press device including a laminate roll and a conveying belt may be used.

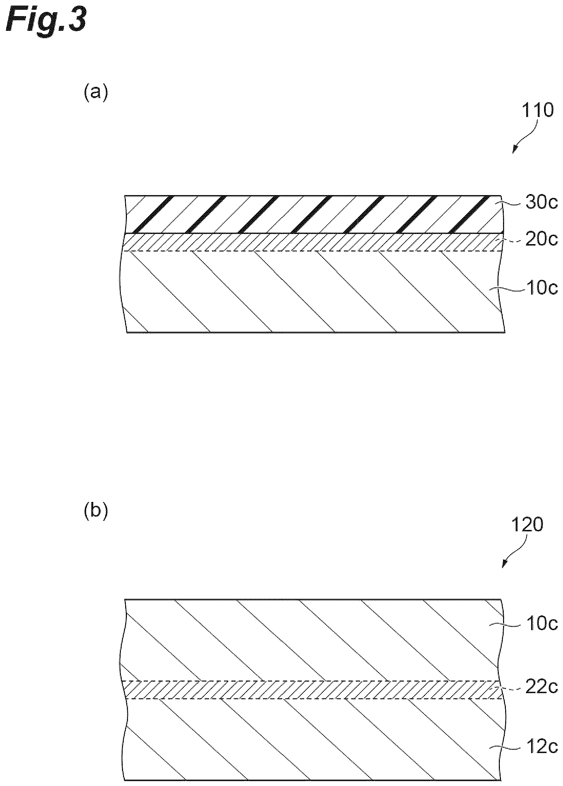

FIG. 3 is a schematic view showing a configuration example of a sound-absorbing member that can be obtained by the method for manufacturing a sound-absorbing member of the present embodiment. A sound-absorbing member 110 shown in FIG. 3(a) has a structure in which a resin layer 30c derived from a resin film, a first adhesive layer 20c derived from an adhesive, and a porous layer 10c derived from a sheet-like material being a porous body are laminated in this order. The sound-absorbing member 110 can be formed of a compressed body obtained through the compression step shown in FIG. 1.

A sound-absorbing member 120 shown in FIG. 3(b) has a structure in which a first porous layer 10c derived from a sheet-like material being a porous body, a second adhesive layer 22c derived from an adhesive, and a second porous layer 12c derived from a sheet-like material being a porous body are laminated in this order. The sound-absorbing member 120 can be formed of a compressed body obtained through the compression step shown in FIG. 2.

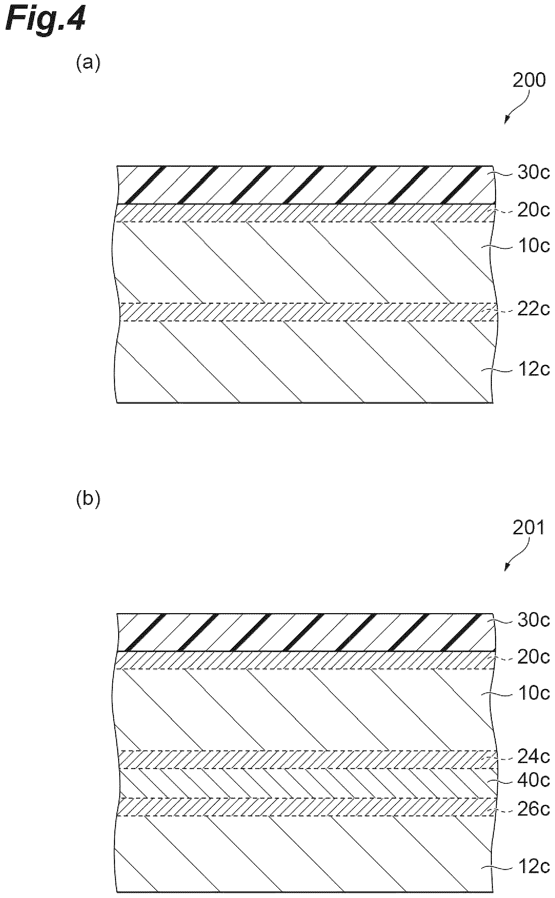

FIGS. 4 to 6 are each a schematic view showing a configuration example of a sound-absorbing member that can be obtained by the method for manufacturing a sound-absorbing member of the present embodiment.

A sound-absorbing member 200 shown in FIG. 4(a) has a structure in which a resin layer 30c derived from a resin film, a first adhesive layer 20c derived from an adhesive, a first porous layer 10c derived from a sheet-like material being a porous body, a second adhesive layer 22c derived from an adhesive, and a second porous layer 12c derived from a sheet-like material being a porous body are laminated in this order. A sound-absorbing member 201 shown in FIG. 4(b) has a structure in which a resin layer 30c derived from a resin film, a first adhesive layer 20c derived from an adhesive, a first porous layer 10c derived from a sheet-like material being a porous body, a second adhesive layer 24c derived from an adhesive, an intermediate layer 40c derived from an intermediate layer-forming sheet-like material, a third adhesive layer 26c derived from an adhesive, and a second porous layer 12c derived from a sheet-like material being a porous body are laminated in this order.

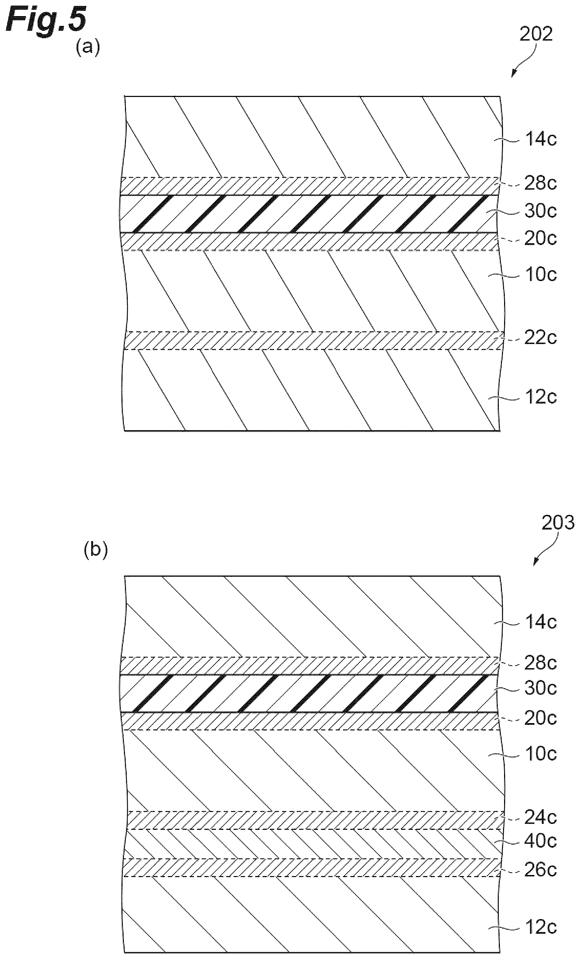

A sound-absorbing member 202 shown in FIG. 5(a) has a structure in which a third porous layer 14c derived from a sheet-like material being a porous body is further laminated on the resin layer 30c derived from a resin film in the sound-absorbing member 200 shown in FIG. 4(a) via a third adhesive layer 28c derived from an adhesive. A sound-absorbing member 203 shown in FIG. 5(b) has a structure in which a third porous layer 14c derived from a sheet-like material being a porous body is further laminated on the resin layer 30c derived from a resin film in the sound-absorbing member 201 shown in FIG. 4(b) via a third adhesive layer 28c derived from an adhesive.

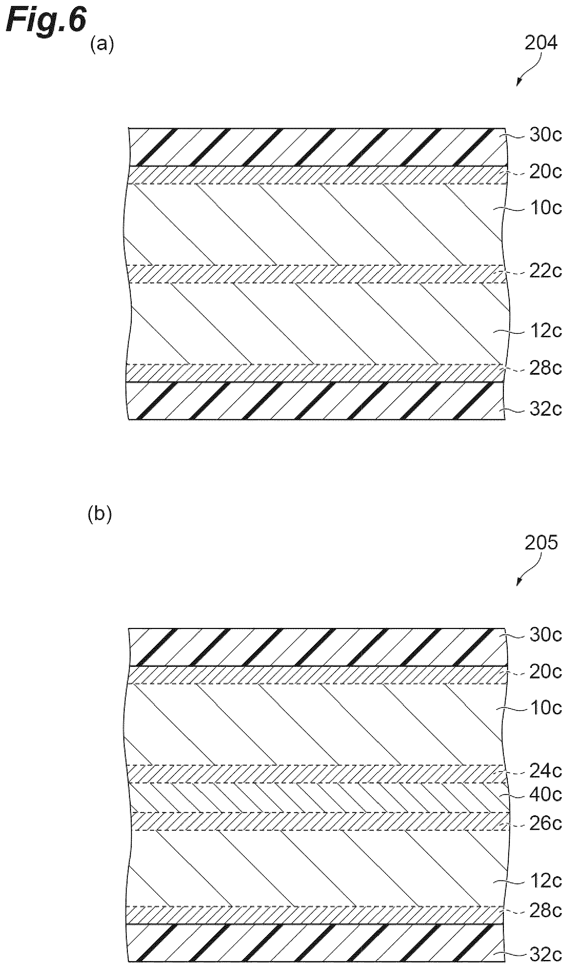

A sound-absorbing member 204 shown in FIG. 6(a) has a structure in which a second resin layer 32c derived from a resin film is further laminated on the second porous layer 12c derived from a sheet-like material being a porous body in the sound-absorbing member 200 shown in FIG. 4(a) via a third adhesive layer 28c derived from an adhesive. A sound-absorbing member 205 shown in FIG. 6(b) has a structure in which a second resin layer 32c derived from a resin film is further laminated on the second porous layer 12c derived from a sheet-like material being a porous body in the sound-absorbing member 201 shown in FIG. 4(b) via a third adhesive layer 28c derived from an adhesive.

In the sound-absorbing member shown in FIGS. 4 to 6, all the layers may be formed in one compression step, and when there are a plurality of porous layers derived from sheet-like materials which are porous, the porous layers may be provided in a plurality of compression steps. In addition, a resin film may be joined to the compressed body obtained in the compression step with an adhesive, or the compressed bodies obtained in the compression steps may be joined with an adhesive.

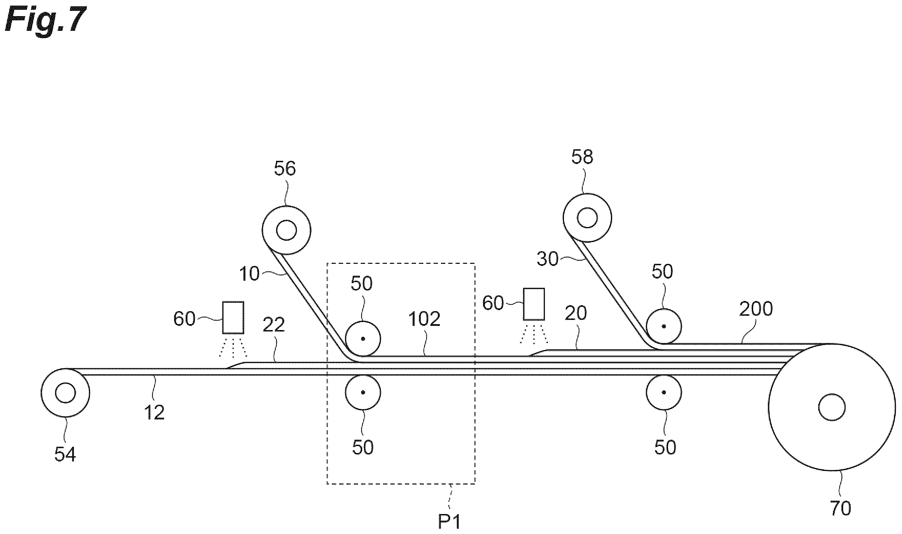

For example, in the case of the sound-absorbing member 200, the sound-absorbing member may be formed of a compressed body obtained by compressing a resin film, a sheet-like material being a porous body, and a sheet-like material being a porous body layered via an adhesive under the conditions of the compression step described above, and as shown in FIG. 7, the sound-absorbing member may be formed by obtaining a compressed body having a structure in which a first porous layer 10c derived from a sheet-like material being a porous body, a second adhesive layer 22c derived from an adhesive, and a second porous layer 12c derived from a sheet-like material being a porous body are laminated by the compression step described above, and then joining the obtained compressed body and a resin film via an adhesive.

The method shown in FIG. 7 includes a step A of applying an adhesive by a spray 60 to a surface of a sheet-like material 12 being a porous body supplied from an unwinding device 54, a step B of layering a sheet-like material 10 being a porous body supplied from the unwinding device 54 on the sheet-like material 12 on a side where an adhesive 22 is provided, and compressing these by a pair of laminate rolls 50 to obtain a compressed body 102, a step C of applying an adhesive by the spray 60 to a surface of the compressed body 102 on a side of a porous layer derived from the sheet-like material 10 being a porous body, a step D of layering a resin film 30 supplied from an unwinding device 58 on the compressed body 102 on a side where an adhesive 20 is provided and joining these by a pair of laminate rolls 50 to obtain a sound-absorbing member 200, and a step E of winding up the sound-absorbing member 200 by a winding device 70, and is a roll-to-roll manufacturing method.

In this method, the above-described compression step can be applied to the step B (a portion surrounded by a broken line P1 in FIG. 7).

In the method shown in FIG. 7, the steps A, B, C, D, and E are continuous, but an intermediate may be wound up in the middle. For example, a sound-absorbing member may be manufactured through a step A1 of applying an adhesive by a spray to a surface of a sheet-like material being a porous body supplied from an unwinding device, a step B1 of layering a sheet-like material being a porous body supplied from another unwinding device on the sheet-like material on a side where the adhesive is provided, and compressing these by a pair of laminate rolls to obtain a compressed body, and a step E1 of winding up the compressed body by a winding device to obtain a wound body of the compressed body as an intermediate, and thereafter through a step C1 of applying an adhesive by a spray to a surface of the compressed body supplied from the wound body obtained in the step E1 on a side of a porous layer derived from the sheet-like material being a porous body, a step D1 of layering a resin film supplied from another unwinding device on the compressed body on a side where the adhesive is provided, and joining these by a pair of laminate rolls to obtain a sound-absorbing member, and a step E2 of winding up the sound-absorbing member by a winding device.

According to the method for manufacturing a sound-absorbing member of the present disclosure, a sound-absorbing member having excellent sound-absorbing properties in a low frequency region can be obtained. Such a sound-absorbing member can be suitably used in applications such as automobiles, railway vehicles, aircrafts, ships, buildings such as houses, electronic devices, precision machines, and acoustic devices. The low frequency region here can be a region with a frequency of 1,500 Hz or less, and may be a region of 1,000 Hz or less, or a region of 800 Hz or less, or a region of 750 Hz or less, or a region of 500 Hz or less.

**Reference Signs List**

    10, 12 Sheet-like material being porous body
    20, 22 Adhesive
    30 Resin film
    50 Laminate roll
    100, 101 Compressed body
    110, 120, 200, 201, 202, 203, 204, 205 Sound-absorbing member

**Claims**

1. A method for manufacturing a sound-absorbing member formed by laminating a plurality of sheet-like materials, the method comprising

    a compression step of compressing a plurality of sheet-like materials layered via an adhesive in a thickness direction thereof to obtain a compressed body, wherein
    at least one of the plurality of sheet-like materials is a porous body, and
    a thickness of at least one of the sheet-like materials being a porous body in the compressed body is 70 to 99% of a thickness before compression.

2. The method for manufacturing a sound-absorbing member according to claim 1, wherein in the compression step, a compressibility in the thickness direction of the plurality of layered sheet-like materials is 10% to 90%.

3. The method for manufacturing a sound-absorbing member according to claim 1 or 2, wherein in the compression step, the plurality of layered sheet-like materials are compressed at a temperature of 10 to 200°C.

4. The method for manufacturing a sound-absorbing member according to claim 1 or 2, wherein the adhesive is provided by spray application or transfer with a roll coater.

5. The method for manufacturing a sound-absorbing member according to claim 1 or 2, wherein the method is a roll-to-roll method.

6. The method for manufacturing a sound-absorbing member according to claim 1 or 2, wherein the method is a roll-to-sheet method.

7. The method for manufacturing a sound-absorbing member according to claim 1 or 2, wherein the sheet-like material being a porous body is a nonwoven fabric or a resin foam.

8. The method for manufacturing a sound-absorbing member according to claim 1 or 2, wherein at least one of the plurality of sheet-like materials is a resin film containing at least one type selected from a group consisting of a polyolefin resin, a polyester resin, and a polyurethane resin.

9. The method for manufacturing a sound-absorbing member according to claim 8, wherein a structure in which a sheet-like material being a porous body and a resin sheet are layered via an adhesive is included in the plurality of layered sheet-like materials.

10. The method for manufacturing a sound-absorbing member according to claim 1 or 2, wherein

    two or more of the plurality of sheet-like materials are porous bodies, and
    a structure in which a sheet-like material being a porous body and a sheet-like material being a porous body are layered via an adhesive is included in the plurality of layered sheet-like materials.

11. The method for manufacturing a sound-absorbing member according to claim 1 or 2, wherein

    two or more of the plurality of sheet-like materials are porous bodies,
    at least one of the plurality of sheet-like materials is a resin film containing at least one type selected from a group consisting of a polyolefin resin, a polyester resin, and a polyurethane resin, and
    a structure in which a resin film, a sheet-like material being a porous body, and a sheet-like material being a porous body are layered in this order via an adhesive is included in the plurality of layered sheet-like materials.

12. The method for manufacturing a sound-absorbing member according to claim 1 or 2, wherein the adhesive contains at least one adhesive component selected from a group consisting of a polyolefin-based resin, a polyester-based resin, a polyurethane-based resin, an acrylic-based resin, and a silicone-based resin.

13. The method for manufacturing a sound-absorbing member according to claim 1 or 2, wherein the adhesive is a hot-melt adhesive.

*Fig.1*

# Fig.2

# Fig.3

(a)

110

30c
20c
10c

(b)

120

10c
22c
12c

# *Fig.4*

(a)

200
30c
20c
10c
22c
12c

(b)

201
30c
20c
10c
24c
40c
26c
12c

# *Fig.5*

(a)

(b)

# *Fig.6*

(a)

204

- 30c
- 20c
- 10c
- 22c
- 12c
- 28c
- 32c

(b)

205

- 30c
- 20c
- 10c
- 24c
- 40c
- 26c
- 12c
- 28c
- 32c

EP 4 545 721 A1

**Fig.7**

| | | |
|---|---|---|
| **INTERNATIONAL SEARCH REPORT** | | International application No.<br><br>**PCT/JP2022/025384** |

| | |
|---|---|
| **A. CLASSIFICATION OF SUBJECT MATTER** | |
| *E04B 1/86*(2006.01)i; *G10K 11/168*(2006.01)i; *B29C 43/30*(2006.01)i<br>　FI:　B29C43/30; G10K11/168; E04B1/86 | |
| According to International Patent Classification (IPC) or to both national classification and IPC | |
| **B. FIELDS SEARCHED** | |
| Minimum documentation searched (classification system followed by classification symbols)<br>　　E04B1/86; G10K11/168; B29C43/30 | |
| Documentation searched other than minimum documentation to the extent that such documents are included in the fields searched<br>　　Published examined utility model applications of Japan 1922-1996<br>　　Published unexamined utility model applications of Japan 1971-2022<br>　　Registered utility model specifications of Japan 1996-2022<br>　　Published registered utility model applications of Japan 1994-2022 | |
| Electronic data base consulted during the international search (name of data base and, where practicable, search terms used) | |

| **C. DOCUMENTS CONSIDERED TO BE RELEVANT** | | |
|---|---|---|
| Category* | Citation of document, with indication, where appropriate, of the relevant passages | Relevant to claim No. |
| X | JP 2021-193449 A (HANWHA AZDEL INC) 23 December 2021 (2021-12-23)<br>　　paragraphs [0004], [0016]-[0021], [0049], [0062], [0065], [0086]-[0093], fig. 8 | 1-13 |

☐ Further documents are listed in the continuation of Box C. 　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 July 2022** | **09 August 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/025384**

| Patent document cited in search report | Publication date (day/month/year) | Patent family member(s) | Publication date (day/month/year) |
|---|---|---|---|
| JP 2021-193449 A | 23 December 2021 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012214957 A
- JP 2019183008 A